# EUROPÄISCHE PATENTSCHRIFT

(11) **EP 3 163 760 B1**
(45) Veröffentlichungstag und Bekanntmachung des Hinweises auf die Patenterteilung: **03.10.2018**
(21) Anmeldenummer: 15191467.8
(22) Anmeldetag: 26.10.2015
(51) Int. Cl.: H04B 1/3877, H01Q 1/32

(54) **VORRICHTUNG, VERFAHREN UND COMPUTERPROGRAMM FÜR EIN FAHRZEUG MIT ZUMINDEST EINER INNENANTENNE UND ZUMINDEST EINER AUSSENANTENNE**
DEVICE, METHOD AND COMPUTER PROGRAM PRODUCT FOR A VEHICLE WITH AT LEAST ONE INTERNAL ANTENNA AND AT LEAST ONE OUTER ANTENNA
DISPOSITIF, PROCÉDÉ ET PROGRAMME INFORMATIQUE POUR VÉHICULE COMPRENANT UNE ANTENNE INTÉRIEURE ET AU MOINS UNE ANTENNE EXTÉRIEURE

(43) Veröffentlichungstag der Anmeldung: 03.05.2017
(73) Patentinhaber: Volkswagen Aktiengesellschaft, 38440 Wolfsburg (DE)
(72) Erfinder: Mohaupt, Matthias, 44789 Bochum (DE)

(56) Entgegenhaltungen:
- US-A1- 2005 227 612
- US-A1- 2014 171 000

## Beschreibung

Die Erfindung bezieht sich auf eine Vorrichtung, ein Verfahren und ein Computerprogramm für ein Fahrzeug mit zumindest einer Innenantenne und zumindest einer Außenantenne, zum Bereitstellen einer Signalverarbeitung für ein Sende-Empfangsmodul basierend auf einer Kombination von Signalen der zumindest einen Innenantenne und der zumindest einen Außenantenne.

Eine Vernetzung von Fahrzeugen nimmt in zunehmendem Maße eine zentrale Stellung im Fahrzeugbau ein. Sowohl eine Vernetzung der Fahrzeuge nach Außen, z.B. in einem Fahrzeug-zu-Fahrzeug-Kommunikationsnetzwerk oder als eine Vernetzung mit einer Werkstatt oder zum pilotierten Parken, als auch eine Vernetzung nach innen, beispielsweise um Fahrzeuginsassen einen Zugang zu Unterhaltungsfunktionen des Fahrzeugs anzubieten oder einen Internetzugang bereitzustellen, gehören zu häufig nachgefragten Funktionen bei neuen Fahrzeugen.

Bei immer mehr Fahrzeugen ist eine Bedampfung der Fahrzeugscheiben vorgesehen, um eine aufheizende Wirkung von Sonneneinstrahlung auf das Fahrzeug zu reduzieren. Die Bedampfung der Scheiben führt jedoch gleichzeitig zu einer Dämpfung elektromagnetischer Signale, beispielsweise von Funksignalen, wie sie zur Vernetzung der Fahrzeuge genutzt werden.

Es besteht der Bedarf, ein verbessertes Konzept für eine Sende-Empfangseinheit für ein Fahrzeug bereitzustellen, die sowohl eine Innen- als auch eine Außenkommunikation berücksichtigt, etwa bei einer erhöhten Dämpfung aufgrund von bedampften Fahrzeugschreiben.

Diesem Bedarf wird durch die Vorrichtung, das Verfahren und das Computerprogramm gemäß der unabhängigen Ansprüche Rechnung getragen.

Die Erfindung schafft eine Vorrichtung, ein Verfahren und ein Computerprogramm für ein Fahrzeug mit zumindest einer Innenantenne und zumindest einer Außenantenne. Die Vorrichtung umfasst ein Sende-Empfangsmodul und ein Kontrollmodul, wobei das Kontrollmodul ausgebildet ist, eine Signalverarbeitung für das Sende-Empfangsmodul bereitzustellen. Die Signalverarbeitung basiert dabei auf einer Kombination von Signalen der zumindest einen Außenantenne und der zumindest einen Innenantenne. Das Kontrollmodul kann dabei beispielsweise eine Maximal-Ratio-Kombination der Signale bereitstellen, also beispielsweise den Signal-Rauschabstand vergrößern, indem es Nutzsignale addiert und die Störsignale nur statistisch überlagert, oder es kann beispielsweise den stärkeren Signalanteil eines Signals dem Sende-Empfangsmodul bereitstellen, also ein Auswahl der Signalanteile der verschiedenen Signalquellen treffen. Das Sende-Empfangsmodul kann basierend auf der Signalverarbeitung dann beispielsweise eine Empfangsqualität erhöhen, ohne dass zusätzliche Empfangsmodule für die unterschiedlichen Antennen benötigt werden.

Ausführungsbeispiele schaffen eine Vorrichtung für ein Fahrzeug. Das Fahrzeug umfasst ferner zumindest eine Innenantenne und zumindest eine Außenantenne. Die Vorrichtung umfasst ein Sende-Empfangsmodul zur Kommunikation über ein Frequenzband. Die Vorrichtung umfasst ferner ein Kontrollmodul ausgebildet zur Steuerung des Sende-Empfangsmoduls. Das Kontrollmodul ist ferner ausgebildet zum Bereitstellen einer Signalverarbeitung für das Sende-Empfangsmodul von Signalen der zumindest einen Innenantenne und der zumindest einen Außenantenne. Die Signalverarbeitung basiert auf einer Kombination der Signale der zumindest einen Innenantenne und der zumindest einen Außenantenne. Ausführungsbeispiele können dabei einen höheren Signal-zu-Rausch-Abstand am Empfänger ermöglichen. Ferner können Ausführungsbeispiele eine Nutzung von Innen- und Außenantennen mit der gleichen Sende-Empfangseinheit ermöglichen. Dies kann beispielsweise einen Verfügbarkeit der Kommunikation auf den Antennen verdoppeln, da sowohl Innen- als auch Außenantennen gleichzeitig genutzt werden können.

In manchen Ausführungsbeispielen kann die Vorrichtung ein weiteres Sende-Empfangsmodul zur Kommunikation über ein weiteres Frequenzband, das von dem Frequenzband des Sende-Empfangsmoduls verschieden ist, umfassen. Das Kontrollmodul kann ferner ausgebildet sein, um eine weitere Signalverarbeitung für das weitere Sende-Empfangsmodul von Signalen der zumindest einen Innenantenne und der zumindest einen Außenantenne basierend auf einer Kombination der Signale der zumindest einen Innenantenne und der zumindest einen Außenantenne bereitzustellen. Eine Nutzung eines weiteren Sende-Empfangsmoduls zur Kommunikation über ein weiteres Frequenzband kann weiter eine Verfügbarkeit der Kommunikation erhöhen und eine Kommunikation in mehreren Frequenzbändern gleichzeitig ermöglichen. Das Bereitstellen der Signalverarbeitung kann ermöglichen, dass beide Sende-Empfangsmodule auf den Innen- und Außenantennen kommunizieren können, beispielsweise gleichzeitig sowohl Innen als auch Außen, oder ein Sende-Empfangsmodul Innen und ein - Sende-Empfangsmodul Außen.

Die Vorrichtung kann in manchen Ausführungsbeispielen ferner zumindest einen Diplexer umfassen, der ausgebildet ist zum Trennen von Frequenzanteilen des Frequenzbands und des weiteren Frequenzbands für die Signalverarbeitung der Signale. Der zumindest eine Diplexer kann eine Trennung der Signalkomponenten der unterschiedlichen Frequenzbänder ermöglichen.

In manchen Ausführungsbeispielen ist das Kontrollmodul ausgebildet, die Signalverarbeitung als Maximal-Ratio-Kombination bereitzustellen. Die Maximal-Ratio-Kombination kann einen Signal-zu-Rausch-Abstand erhöhen, etwa indem Nutzanteile der Signale addiert werden und sich Rauschanteile der Signale lediglich statistisch überlagern. Alternativ oder zusätzlich kann das Kontrollmodul ausgebildet sein, die Signalverarbeitung als Auslese des stärkeren Signals der Signale der zumindest einen Innenantenne und der zumindest einen Außenantenne bereitzustellen. Die Nutzung der Kombination als Auslesen kann es ermöglichen, beide Antennen gleichzeitig zum Empfangen zu nutzen, ohne ein weiteres Empfangsmodul zu benötigen.

In einigen Ausführungsbeispielen kann die Vorrichtung ferner ein oder mehrere angepasste Filter für eine Filterung der Signale vor der Signalverarbeitung umfassen. Die angepassten Filter können genutzt werden, um einen Signal-zu-Rausch-Abstand zu erhöhen, und beispielsweise eine Maximal-Ratio-Kombination ermöglichen.

In manchen Ausführungsbeispielen können die ein oder mehreren angepassten Filter zumindest ein Element der Gruppe von Signalangepasstes Filter, Kanalangepasstes Filter und Signal- und Kanalangepasstes Filter umfassen. Die angepassten Filter können genutzt werden, um einen Signal-zu-Rausch-Abstand zu erhöhen, und beispielsweise eine Maximal-Ratio-Kombination ermöglichen.

In zumindest einigen Ausführungsbeispielen kann die Signalverarbeitung auf Autokorrelationsfunktionen der Signale basieren. Die Autokorrelationsfunktionen können genutzt werden, um ein Nutzsignal, das in den Signalen umfasst ist, zu verstärken, und einen Signal-zu-Rausch-Abstand zu erhöhen.

In manchen Ausführungsbeispielen kann das Sende-Empfangsmodul ausgebildet sein, um gleichzeitig über die Innenantenne und über die Außenantenne zu kommunizieren. Dies kann eine Verfügbarkeit der Kommunikation auf der Innen- und Außenantenne erhöhen.

In zumindest einigen Ausführungsbeispielen kann das Kontrollmodul ausgebildet sein, um ein Nutzsignal eines Kommunikationspartners in den empfangenen Signalen zu bestimmen. Das Kontrollmodul kann ausgebildet sein, um zu bestimmen, ob ein Signalanteil des Nutzsignals der Innenantenne oder ein Signalanteil des Nutzsignals der Außenantenne überwiegt. Das Kontrollmodul kann ferner ausgebildet sein, um basierend auf den Signalanteilen ein Ausgangssignal für den Kommunikationspartner über das Sende-Empfangsmodul über die Innenantenne oder die Außenantenne bereitzustellen. Dies kann es ermöglichen, Funkressourcen örtlich zu trennen und eine verfügbare Übertragungskapazität zu erhöhen. Außerdem kann es ermöglichen, dass Signale an der Antenne bereitgestellt werden, über welche der Empfänger diese besser empfängt.

In manchen Ausführungsbeispielen kann das Kontrollmodul ausgebildet sein, mit dem Sende-Empfangsmodul einen Rake-Empfänger zu bilden. Der Rake-Empfänger kann genutzt werden, um ein Nutzsignal, das in den Signalen umfasst ist, zu verstärken, und einen Signal-zu-Rausch-Abstand zu erhöhen.

Ausführungsbeispiele schaffen ferner ein Verfahren für ein Fahrzeug. Das Fahrzeug umfasst zumindest eine Innenantenne und zumindest eine Außenantenne. Das Verfahren umfasst Kombinieren der Signale der zumindest einen Innenantenne und der zumindest einen Außenantenne. Das Verfahren umfasst ferner Verarbeiten der Kombination der Signale der zumindest einen Innenantenne und der zumindest einen Außenantenne.

Ausführungsbeispiele schaffen ferner ein Programm mit einem Programmcode zum Durchführen des Verfahrens wenn der Programmcode auf einem Computer, einem Prozessor, einem Kontrollmodul oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Blockdiagramm eines Ausführungsbeispiels einer Vorrichtung für ein Fahrzeug;
- Fig. 1a: illustriert ein Blockdiagramm eines weiteren Ausführungsbeispiels der Vorrichtung ferner umfassend ein weiteres Sende-Empfangsmodul;
- Fig. 2: zeigt ein Blockdiagramm eines möglichen Anwendungsfelds einer Außenantenne;
- Fig. 3: zeigt ein Blockdiagramm eines möglichen Anwendungsfelds einer Innenantenne;
- Fig. 4: zeigt ein konventionelles System mit einem Schalter;
- Fig. 4a: zeigt ein Blockdiagramm des konventionellen Systems mit dem Schalter;
- Fig. 5a: zeigt ein Blockdiagramm eines beispielhaften Ausführungsbeispiels ohne einen Schalter:
- Fig. 5b: zeigt eine Erweiterung des Blockdiagramms des beispielhaften Ausführungsbeispiels ohne Schalter; und
- Fig. 6: illustriert ein Flussdiagramm eines Ausführungsbeispiels eines Verfahrens für ein Fahrzeug.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst.

Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Künftige Automobilgenerationen werden voraussichtlich immer mehr bedampfte Scheiben haben, die die Sonneneinstrahlung ins Fahrzeuginnere verringern sollen. Nebeneffekt ist eine erhöhte Dämpfung elektromagnetischer Strahlung. Die Folge ist eine schlechtere Funkverbindung vom Fahrzeuginnenraum nach draußen. Dies führt zu einer Verschlechterung der Übertragungsqualität, geringeren Datenraten oder gar komplettem Abreißen der Funkverbindung.

Aus diesem Grund ist eine Verbindung über eine externe WLAN Antenne für eine Informationseinheit des Fahrzeugs wünschenswert. Da die Verbindung jedoch nicht zwangsläufig zum Fahrzeugaußenraum, sondern auch im Innenraum aufgebaut werden kann (z. B. ein mobiler Zugangspunkt, auch engl. Mobile Hotspot eines Smartphones) kann eine gleichzeitige Verbindung im Innenraum erforderlich sein. Dabei kann unbekannt sein, ob sich der Hotspot innerhalb oder außerhalb des Fahrzeugs befindet.

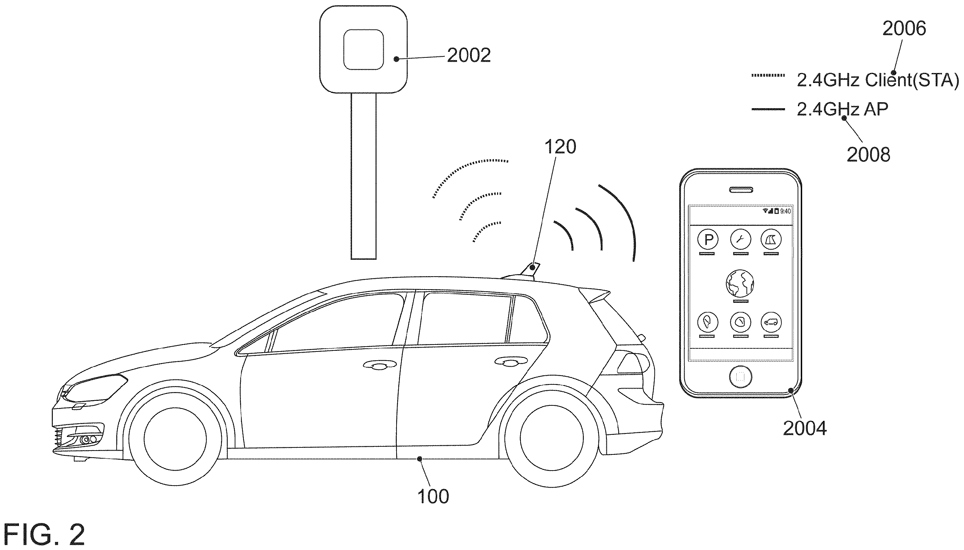

Fig. 2 zeigt ein mögliches Anwendungsfeld. Ein Fahrzeug 100 kann sich beispielsweise über eine Außenantenne 120 mit einem externen Zugangspunkt 2002 (auch engl. Access Point) verbinden, etwa als Client (Nutzer) in einem 2,4GHz-Frequenzband 2006, oder es könnte einen Zugangspunkt im 2,4GHz-Frequenzband 2008 für ein mobiles Endgerät 2004 bereitstellen, beispielsweise für pilotiertes Parken, etwa zur Übertragung von Kameradaten.

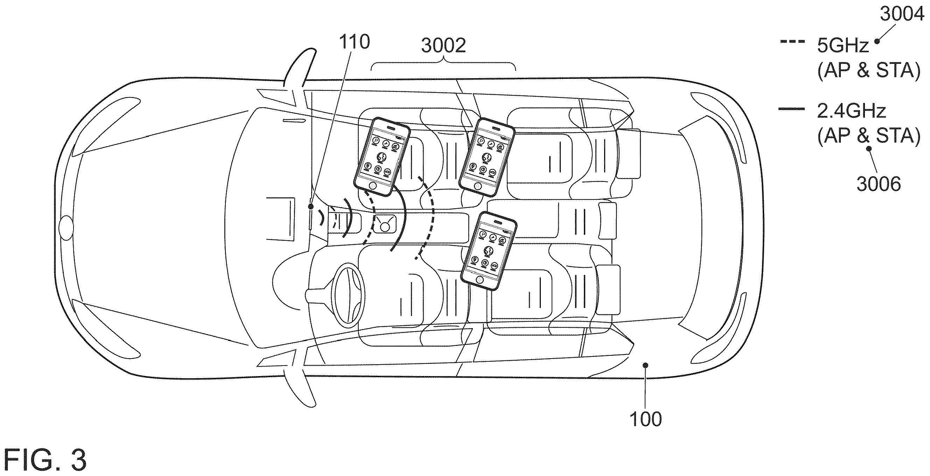

Fig. 3 zeigt eine beispielhafte Abdeckung durch eine Innenantenne 110, beispielsweise als Zugangspunkt für mobile Endgeräte 3002 im Fahrzeuginnern, oder über eine Nutzung eines mobilen Zugangspunkts eines mobilen Endgeräts (auch engl. Mobile Hotspot) durch das Fahrzeug, zum Verbinden des Fahrzeugs 100 mit einem Mobilkommunikationsnetzwerk. Dabei könnten beispielsweise ein 5GHz-Frequenzband 3004 oder ein 2,4GHz-Frequenzband 3006 genutzt werden.

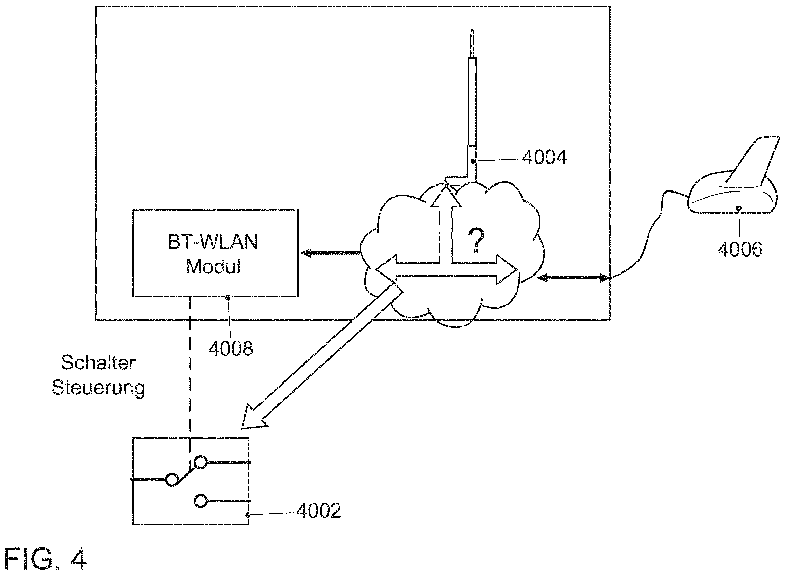

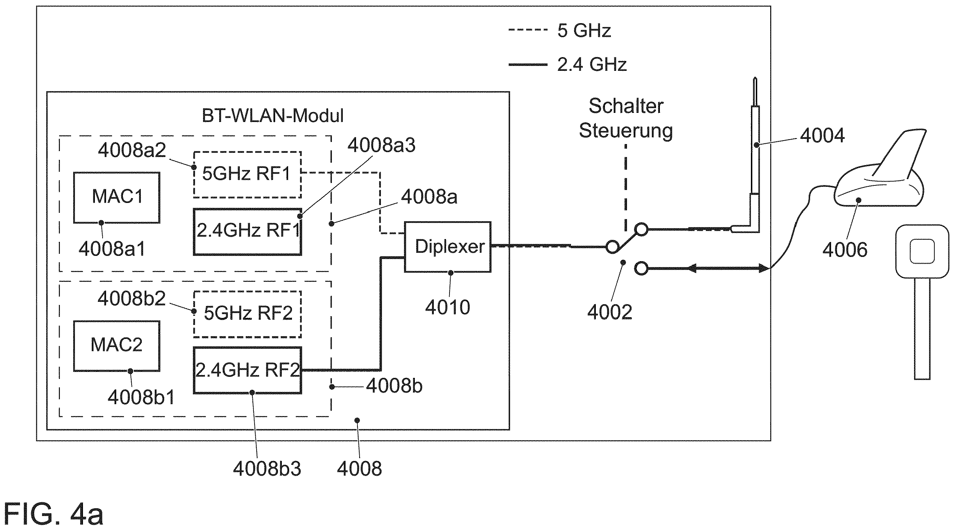

Fig. 4 zeigt eine konventionelle Lösung. Ein Schalter 4002 kann eine Nutzung einer Innenantenne 4004 oder einer Außenantenne 4006 durch ein Sende-Empfangsmodul 4008, beispielsweise ein kombiniertes Bluetooth-Nahfunk- und Kabelloses-Lokales-Zugangsnetzwerk (auch engl. Wireless Local Access Network, WLAN)-Sende-Empfangsmodul beeinflussen. Der Schalter kann eine statische Umschaltung zwischen der Innen- und der Außenantenne 4004; 4006 bewirken, oder der Schalter kann dynamisch gesteuert werden und die Nutzung der Innen- oder Außenantenne 4004; 4006 in Abhängigkeit von der Position der Gegenstelle ermöglichen.

Fig. 4a zeigt beispielhaft ein Blockdiagramm der konventionellen Lösung. Das Sende-Empfangsmodul 4008 umfasst ein erstes Teilmodul 4008a, das ausgebildet ist, in einem 5Ghz-Frequenzband zu kommunizieren und ein zweites Teilmodul 4008b, das ausgebildet ist in einem 2,4GHz-Frequenzband zu kommunizieren. Die Teilmodule umfassen Medien-Zugangssteuerungsmodule (auch engl. Media Access Control, MAC) 4008a1; 4008b1, und Sende-Empfangskomponenten für das 5Ghz-Frequenzband 4008a2; 4008b2 und für das 2,4Ghz-Frequenzband 4008a3; 4008b3. Ein Diplexer 4010 teilt die Frequenzbandkomponenten in den empfangenen Signalen auf. Der Schalter 4002 ist mit dem Diplexer 4010 und der Innenantenne 4004 und der Außenantenne 4006 gekoppelt, und stellt das Signal der Innen-4004 oder Außenantenne 4006 dem Diplexer bereit. In einem beispielhaften Szenario ist es unbekannt, ob sich ein Hotspot, an den sich eine Informationseinheit eines Fahrzeugs verbinden will, im Fahrzeuginnenraum oder Außen befindet. Die Informationseinheit schaltet in der konventionellen Lösung zwischen der Innenantenne 4004 und der Außenantenne 4006 um, um den Funkraum zu analysieren. Dadurch kann sich beispielsweise zeitlich gesehen die Bandbreite oder Übertragungskapazität im genutzten Frequenzband halbieren. Dies kann sich beispielsweise negativ auf Übertragungen mit großem Datenvolumen auswirken.

Des Weiteren können bei Verwendung von Mehrfrequenzband-Antennen beide Bänder häufig lediglich zeitgleich geschaltet werden. Verbindet sich die Informationseinheit mit einem externen 2,4 GHz Hotspot, kann auch der 5GHz Zugangspunkt im Fahrzeug während dieser Zeit nicht angeboten werden, so dass sich zeitlich gesehen die Bandbreite ebenfalls halbieren kann.

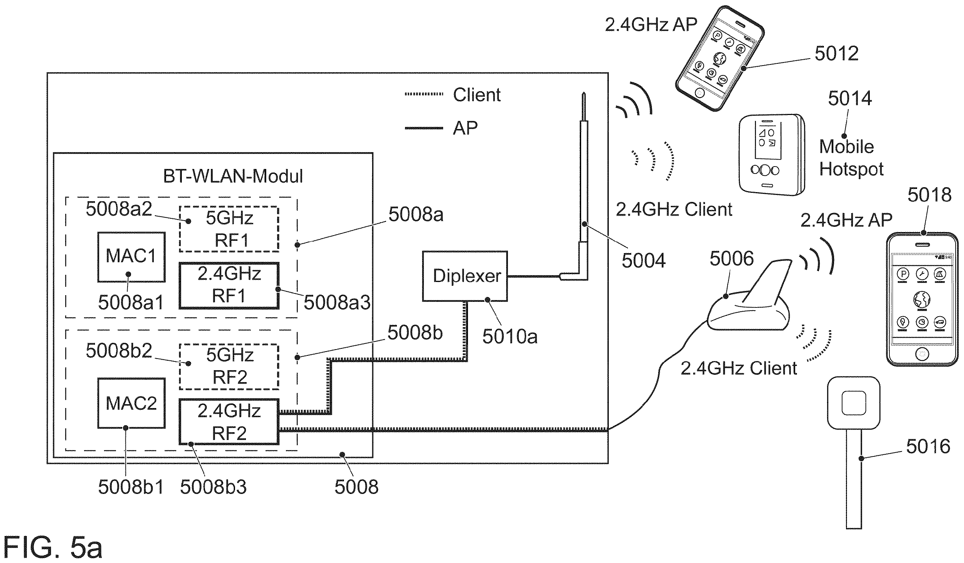

Fig. 5a zeigt ein Blockdiagramm eines beispielhaften Ausführungsbeispiels ohne einen Schalter. Fig. 5a zeigt ein Sende-Empfangsmodul 5008 mit einem ersten Teilmodul 5008a und einem zweiten Teilmodul 5008b. Die Teilmodule umfassen Medien-Zugangssteuerungsmodule 5008a1; 5008b1, und Sende-Empfangskomponenten für das 5Ghz-Frequenzband 5008a2; 5008b2 und für das 2,4Ghz-Frequenzband 5008a3; 5008b3. Fig. 5a zeigt ferner einen Diplexer 5010a und eine Innenantenne 5004 und eine Außenantenne 5006. Fig. 5a zeigt beispielhaft eine Kommunikation über lediglich ein Frequenzband (2,4GHz). Mittels einer Signalverarbeitung einer Kombination der Signale kann das zweite Teilmodul 5008b in manchen

Ausführungsbeispielen gleichzeitig basierend auf Signalen der Innenantenne 5004 und der Außenantenne 5006 kommunizieren. Über die Innenantenne kann das Sende-Empfangsmodul 5008 beispielsweise einen Zugangspunkt für ein mobiles Endgerät 5012 bereitstellen, oder als Nutzer einen mobilen Zugangspunkt 5014 als Verbindung zu einem mobilen Kommunikationsnetzwerk nutzen. Über die Außenantenne 5006 kann das Sende-Empfangsmodul 5008 beispielsweise sich zu einem Zugangspunkt 5016 verbinden oder einen Zugangspunkt für ein mobiles Endgerät 5018 bereitstellen, beispielsweise für ein pilotiertes Parken.

Durch Nutzung und Verarbeitung einer Kombination der Signale (etwa durch eine Maximal-Ratio-Kombination), kann der Schalter entfallen. Beispielsweise können in manchen Ausführungsbeispielen interne und externe Antenne simultan angeschlossen werden. Dadurch kann in manchen Ausführungsbeispielen eine gleichermaßen gute Abdeckung von Innen- und Außenraum erreicht werden. Bei Verwendung von zwei Sende-Empfangseinheiten kann beispielsweise zwischen einer Nutzung der Sende-Empfangseinheiten als Nutzer und einer Nutzung als Zugangspunkt des jeweiligen Bandes hin- und hergeschaltet werden. Das andere Band kann zu diesem Zeitpunkt beispielsweise inaktiv sein.

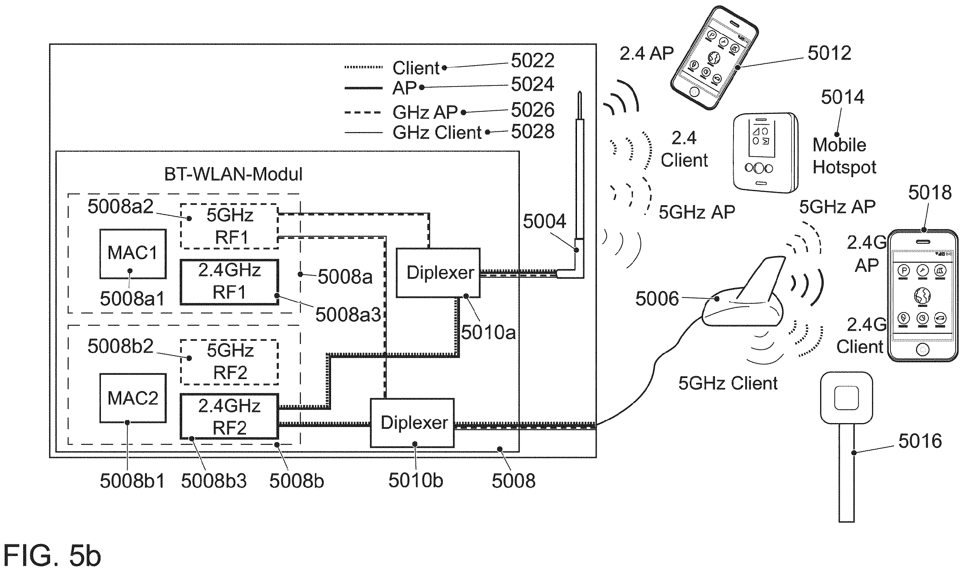

Fig. 5b zeigt eine Erweiterung der Fig. 5a, in der auch beispielhaft die Pfade für einen simultanen Betrieb der 2,4GHz und 5Ghz-Bänder gezeigt werden, und einen zweiten Diplexer 5010b für die Außenantenne. Die verschiedenen gestrichelten Pfade zeigen die Signalkomponenten 2,4GHz als Nutzer 5022, 2,4GHz als Zugangspunkt 5024, 5GHz als Zugangspunkt 5026 und 5GHz als Nutzer 5028.

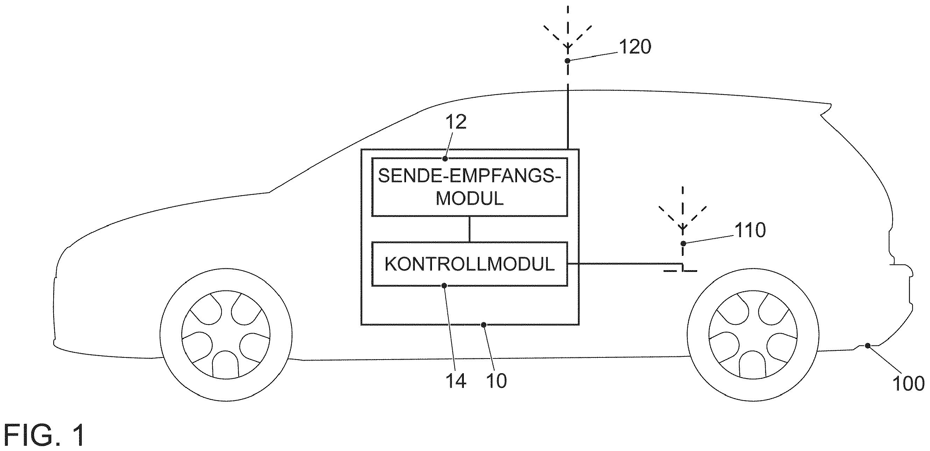

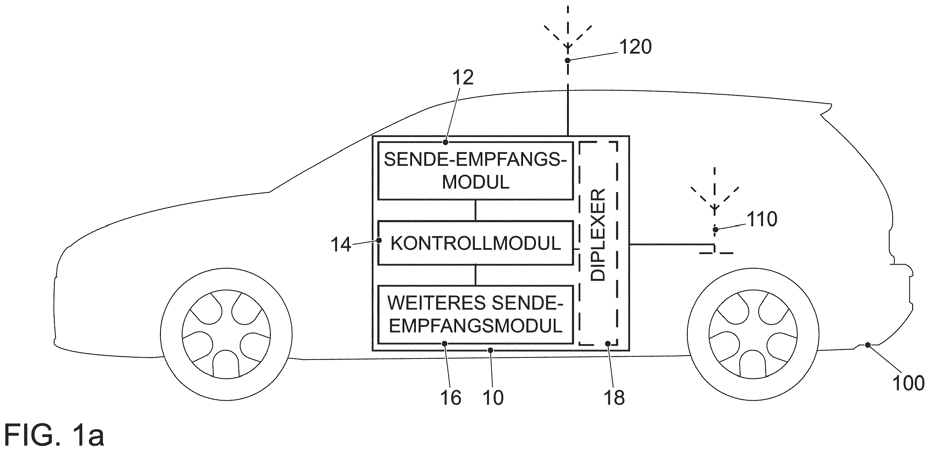

Fig. 1 illustriert ein Blockdiagramm eines Ausführungsbeispiels einer Vorrichtung 10 für ein Fahrzeug 100. Das Fahrzeug 100 umfasst ferner zumindest eine Innenantenne 110 und zumindest eine Außenantenne 120.

In zumindest manchen Ausführungsbeispielen kann das Fahrzeug 100 beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen. Die Außenantenne 120 kann beispielsweise einem Antennenmodul entsprechen, das so an dem Fahrzeug angebracht ist, dass es eine Kommunikation mit Gegenstellen außerhalb des Fahrzeugs ermöglicht. Die Außenantenne 120 kann beispielsweise außerhalb eines Faraday'schen Käfigs des Fahrzeugs angebracht sein. Die Außenantenne 120 kann beispielsweise ausgebildet sein, um Funksignale von Gegenstellen zu empfangen, die sich außerhalb des Fahrzeugs 100 befinden. Die Außenantenne 120 kann beispielsweise einer Dachantenne des Fahrzeugs 100 entsprechen. Die Innenantenne 110 kann beispielsweise einem Antennenmodul entsprechen, das so innerhalb des Fahrzeugs 100 angebracht ist, dass es eine Kommunikation mit Gegenstellen innerhalb des Fahrzeugs ermöglicht. Die Innenantenne 110 kann beispielsweise innerhalbes eines Faraday'schen Käfigs des Fahrzeugs angebracht sein. Die Innenantenne 110 kann beispielsweise ausgebildet sein, um Funksignale von Gegenstellen zu empfangen, die sich innerhalb des Fahrzeugs 100 befinden. Die Innenantenne 110 kann beispielsweise einem inneren Antennenmodul einer Informationseinheit des Fahrzeugs 100 entsprechen. Die Innenantenne 110 kann beispielsweise der Innenantenne 5004 entsprechen, die Außenantenne 120 kann beispielsweise der Außenantenne 5006 entsprechen, Das Sende-Empfangsmodul 5008 kann beispielsweise der Vorrichtung 10 entsprechen.

Die Vorrichtung 10 umfasst ein Sende-Empfangsmodul 12 zur Kommunikation über ein Frequenzband. In Ausführungsbeispielen kann das Sende-Empfangs-Modul 12, und ein optionales weiteres Sende-Empfangsmodul 16 aus Fig. 1a, typische Sender- bzw. Empfängerkomponenten enthalten. Darunter können beispielsweise ein oder mehrere Filter, ein oder mehrere Mischer, ein oder mehrere Verstärker, ein oder mehrere Diplexer, ein oder mehrere Duplexer, usw. fallen. Das Frequenzband, und ein optionales weiteres Frequenzband aus Fig. 1a eingeführt wird, kann beispielsweise einem Frequenzband eines Mobilkommunikationssystems entsprechen, beispielsweise einem 2,4GHz, 5GHz, oder 5,9GHz-Frequenzband eines Mobilkommunikationssystems gemäß IEEE (Institute of Electrical and Electronics Engineers, Institut der Elektro- und Elektronikingenieure) Standard 802.11, oder einem Frequenzband eines 3GPP (3rd Generation Partnership Project, Forschungspartnerschaft für Mobilkommunikationssysteme der 3. Generation) Mobilkommunikationssystems, etwa Universal Mobile Telecommunication System (UMTS), Long Term Evolution (LTE), oder eines Mobilkommunikationssystems der 5. Generation, oder einem Frequenzband eines Mikrowellen-basieren Mobilkommunikationssystem entsprechen. Das Sende-Empfangsmodul 12 und/oder das optionale Sende-Empfangsmodul 16 können demnach ausgebildet sein zur Kommunikation in einem Mobilkommunikationssystem gemäß IEEE Standard 802.11, Bluetooth, und/oder in einem der oben genannten 3GPP Mobilkommunikationssysteme. In zumindest manchen Ausführungsbeispielen kann das Sende-Empfangsmodul 12 und/oder das weitere Sende-Empfangsmodul 16 ausgebildet sein, um gleichzeitig über die Innenantenne 110 und über die Außenantenne 120 zu kommunizieren. Das Sende-Empfangsmodul 12 kann beispielsweise dem ersten Teilmodul 5008a und das weitere Sende-Empfangsmodul 16 kann beispielsweise dem zweiten Teilmodul 5008b entsprechen.

Die Vorrichtung umfasst ein Kontrollmodul 14 ausgebildet zur Steuerung des Sende-Empfangsmoduls 12. Das Kontrollmodul 14 ist ferner ausgebildet zum Bereitstellen einer Signalverarbeitung für das Sende-Empfangsmodul 12 von Signalen der zumindest einen Innenantenne 110 und der zumindest einen Außenantenne 120 basierend auf einer Kombination der Signale der zumindest einen Innenantenne 110 und der zumindest einen Außenantenne 120.

In Ausführungsbeispielen kann die Kontrollmodul 14 einem beliebigen Controller oder Prozessor oder einer programmierbaren Hardwarekomponente entsprechen. Beispielsweise kann das Kontrollmodul 14 auch als Software realisiert sein, die für eine entsprechende Hardwarekomponente programmiert ist. Insofern kann das Kontrollmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14 denkbar. Das Sende-Empfangsmodul 12 und das optionale weitere Sende-Empfangsmodul 16 sind mit dem Kontrollmodul 14 gekoppelt. Die Innenantenne 110 und die Außenantenne 120 sind ferner mit der Vorrichtung 10 gekoppelt.

Fig. 1a illustriert ein Blockdiagramm eines weiteren Ausführungsbeispiels der Vorrichtung 10 ferner umfassend das weiteres Sende-Empfangsmodul 16 zur Kommunikation über das weitere Frequenzband, das von dem Frequenzband des Sende-Empfangsmoduls 12 verschieden ist. Das Kontrollmodul 14 kann ferner ausgebildet sein, eine weitere Signalverarbeitung für das weitere Sende-Empfangsmodul 16 von Signalen der zumindest einen Innenantenne 110 und der zumindest einen Außenantenne 120 basierend auf einer Kombination der Signale der zumindest einen Innenantenne 110 und der zumindest einen Außenantenne 120 bereitzustellen. In manchen Ausführungsbeispielen kann die Vorrichtung 10 ferner optional zumindest einen Diplexer 18 ausgebildet zum Trennen von Frequenzanteilen des Frequenzbands und des weiteren Frequenzbands für die Signalverarbeitung der Signale umfassen. Der zumindest eine Diplexer 18 kann beispielsweise ausgebildet sein, um Frequenzraum-Multiplexing der Signale der Innenantenne 110 und/oder der Außenantenne 120 bereitzustellen und dem Sende-Empfangs-Modul 12 und/oder dem Sende-Empfangs-Modul 16 Signalanteile des von ihnen verwendeten Frequenzbands bereitzustellen.

In zumindest einigen Ausführungsbeispielen kann das Kontrollmodul 14 ausgebildet sein, die Signalverarbeitung als Maximal-Ratio-Kombination bereitzustellen. Das Kontrollmodul 14 kann beispielsweise ausgebildet sein, ein Nutzsignalanteil, das in den Signalen der zumindest einen Innenantenne 110 und der zumindest einen Außenantenne 120 umfasst ist, zu addieren und einen Rauschanteil in den Signalen statistisch zu überlagern. Das Kontrollmodul 14 kann ferner ausgebildet sein, um eine Verstärkung der Signalanteile der Signale der zumindest einen Innenantenne 110 und der zumindest einen Außenantenne 120 basierend auf einem quadratischen Mittel der Signalpegel anzupassen. In manchen Ausführungsbeispielen kann die Vorrichtung 10 ferner ein oder mehrere angepasste Filter für eine Filterung der Signale vor der Signalverarbeitung umfassen. Das Kontrollmodul 14 kann ausgebildet sein, die Maximal-Ratio-Kombination basierend auf den ein oder mehreren angepassten Filtern bereitzustellen. Die ein oder mehreren angepassten Filter können beispielsweise zumindest ein Element der Gruppe von Signalangepasstes Filter, Kanalangepasstes Filter und Signal- und Kanalangepasstes Filter umfassen. Das Kontrollmodul 14 kann ferner ausgebildet sein, die Signalverarbeitung basierend auf Autokorrelationsfunktionen der Signale bereitzustellen. Das Kontrollmodul 14 kann beispielsweise ausgebildet sein, die Maximal-Ratio-Kombination basierend auf Autokorrelationsfunktionen der Signale der zumindest einen Innantenne 110 und der zumindest einen Außenantenne 120 bereitzustellen.

Alternativ oder zusätzlich kann das Kontrollmodul 14 ausgebildet sein, die Signalverarbeitung als Auslese des stärkeren Signals der Signale der zumindest einen Innenantenne 110 und der zumindest einen Außenantenne 120 bereitzustellen. Beispielsweise kann das Kontrollmodul 14 ausgebildet sein, die Auslese des stärkeren Signals auf einem fortwährenden Vergleich der Signalstärken zu treffen (auch engl. Selection Combining). Alternativ kann das Kontrollmodul 14 ausgebildet sein, die Auslese des stärkeren Signals zu treffen, wenn ein derzeit ausgewähltes Signal unter einen Schwellenwert fällt (auch engl. Scanning/Switched Combining). In zumindest manchen Ausführungsbeispielen kann das Kontrollmodul 14 ausgebildet sein, die Auswahl basierend auf einem Signalpegel der Signale und/oder basierend auf einem Signal-zu-Rausch-Abstand der Signale zu treffen.

In zumindest manchen Ausführungsbeispielen kann das Kontrollmodul 14 ausgebildet sein, mit dem Sende-Empfangsmodul 12 einen Rake-Empfänger zu bilden. Das Kontrollmodul 14 kann beispielsweise ausgebildet sein, zeitlich versetzte Signalanteile eines Nutzsignals in den Signalen der zumindest einen Innantenne 110 und der zumindest einen Außenantenne 120 zu empfangen und die Signalverarbeitung basierend auf den zeitlich versetzten Signalanteilen bereitzustellen, etwa um Signale, die über eine Mehrwegeausbreitung empfangen wurden, zu verarbeiten. Das Kontrollmodul 14 kann beispielsweise ausgebildet sein, die Signalverarbeitung der zeitlich versetzten Signalanteile basierend auf Korrelationsfunktionen bereitzustellen.

In zumindest einigen Ausführungsbeispielen kann das Kontrollmodul 14 ausgebildet sein, ein Nutzsignal eines Kommunikationspartners in den empfangenen Signalen zu bestimmen. Das Kontrollmodul 14 kann beispielsweise ausgebildete sein, Nutzsignale oder Nutzsignalanteile verschiedener Kommunikationspartner zu unterscheiden. Das Kontrollmodul 14 kann ferner ausgebildet sein, um zu bestimmen, ob ein Signalanteil des Nutzsignals der Innenantenne 110 oder ein Signalanteil des Nutzsignals der Außenantenne 120 überwiegt. Das Kontrollmodul 14 kann beispielsweise ausgebildet sein, um zu unterscheiden, ob über die Innenantenne 110 oder die Außenantenne 120 ein Nutzsignal mit einem höheren Signalpegel und/oder Signal-zu-Rausch-Abstand empfangen wird. Das Kontrollmodul 14 kann ferner ausgebildet sein, basierend auf den Signalanteilen ein Ausgangssignal für den Kommunikationspartner über das Sende-Empfangsmodul 12 über die Innenantenne 110 oder die Außenantenne 120 bereitzustellen. Das Sende-Empfangsmodul 12 kann beispielsweise ausgebildet sein, in einer Sende-Einheit des Sende-Empfangsmoduls 12 Signale über die Innenantenne 110, die Außenantenne 120, oder beide Antennen zu übertragen. Das Kontrollmodul 14 kann ausgebildet sein, das Sende-Empfangsmodul 12 so zu steuern, dass die Sende-Einheit das Ausgangssignal auf der Antenne bereitstellt, deren Signalanteil im Empfangssignal den größeren Signalpegel und/oder Signal-zu-Rausch-Abstand aufweist.

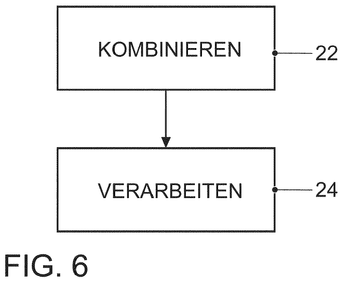

Fig. 6 illustriert ein Flussdiagramm eines Ausführungsbeispiels eines Verfahrens für ein Fahrzeug 100. Das Fahrzeug 100 umfasst zumindest eine Innenantenne 110 und zumindest eine Außenantenne 120. Das Verfahren umfasst Kombinieren 22 der Signale der zumindest einen Innenantenne 110 und der zumindest einen Außenantenne 120. Das Verfahren umfasst ferner Verarbeiten 24 der Kombination der Signale der zumindest einen Innenantenne 110 und der zumindest einen Außenantenne 120.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung
- 12: Sende-Empfangsmodul
- 14: Kontrollmodul
- 16: Weiteres Sende-Empfangsmodul
- 18: Diplexer
- 22: Kombinieren
- 24: Verarbeiten
- 100: Fahrzeug
- 110: Innenantenne
- 120: Außenantenne
- 2002: Externer Zugangspunkt
- 2004: Mobiles Endgerät
- 2006: Verbindung mit externem Zugangspunkt 2002 über 2,4GHz Frequenzband
- 2008: Bereitstellen von Zugangspunkt im 2,4GHz Frequenzband
- 3002: Mobile Endgeräte
- 3004: 5GHz-Frequenzband
- 3006: 2,4GHz-Frequenzband
- 4002: Schalter
- 4004: Innenantenne
- 4006: Außenantenne
- 4008: Sende-Empfangsmodul
- 4008a: Erstes Teilmodul
- 4008a1: Zugangssteuerungsmodul
- 4008a2: Sende-Empfangskomponente
- 4008a3: Sende-Empfangskomponente
- 4008b: Zweites Teilmodul
- 4008b1: Zugangssteuerungsmodul
- 4008b2: Sende-Empfangskomponente
- 4008b3: Sende-Empfangskomponente
- 4010: Diplexer
- 5004: Innenantenne
- 5006: Außenantenne
- 5008: Sende-Empfangsmodul
- 5008a: Erstes Teilmodul
- 5008a1: Zugangssteuerungsmodul
- 5008a2: Sende-Empfangskomponente
- 5008a3: Sende-Empfangskomponente
- 5008b: Zweites Teilmodul
- 5008b1: Zugangssteuerungsmodul
- 5008b2: Sende-Empfangskomponente
- 5008b3: Sende-Empfangskomponente
- 5010a: Diplexer
- 5010b: Diplexer
- 5012: Mobiles Endgerät
- 5014: Mobiler Zugangspunkt
- 5016: Zugangspunkt
- 5018: Mobiles Endgerät
- 5022: Signalkomponente 2,4GHz Nutzer
- 5024: Signalkomponente 2,4GHz Zugangspunkt
- 5026: Signalkomponente 5GHz Zugangspunkt
- 5028: Signalkomponente 5GHz Nutzer

## Patentansprüche

1. Vorrichtung (10) für ein Fahrzeug (100), das Fahrzeug (100) ferner umfassend zumindest eine Innenantenne (110) und zumindest eine Außenantenne (120), die Vorrichtung umfassend
ein Sende-Empfangsmodul (12) zur Kommunikation über ein Frequenzband; und
ein Kontrollmodul (14) ausgebildet zur:
Steuerung des Sende-Empfangsmoduls (12), Bereitstellen einer Signalverarbeitung für das Sende-Empfangsmodul (12) von Signalen der zumindest einen Innenantenne (110) und der zumindest einen Außenantenne (120) basierend auf einer Kombination der Signale der zumindest einen Innenantenne (110) und der zumindest einen Außenantenne (120)
wobei das Kontrollmodul (14) ausgebildet ist, ein Nutzsignal eines Kommunikationspartners in den empfangenen Signalen zu bestimmen,
und wobei das Kontrollmodul (14) ausgebildet ist, zu bestimmen, ob ein Signalanteil des Nutzsignals der Innenantenne (110) oder ein Signalanteil des Nutzsignals der Außenantenne (120) überwiegt,
und wobei das Kontrollmodul (14) ausgebildet ist, basierend auf den Signalanteilen ein Ausgangssignal für den Kommunikationspartner über das Sende-Empfangsmodul (12) über die Innenantenne (110) oder die Außenantenne (120) bereitzustellen.

2. Vorrichtung (10) gemäß Anspruch 1 ferner umfassend ein weiteres Sende-Empfangsmodul (16) zur Kommunikation über ein weiteres Frequenzband, das von dem Frequenzband des Sende-Empfangsmoduls (12) verschieden ist,
wobei das Kontrollmodul (14) ferner ausgebildet ist, eine weitere Signalverarbeitung für das weitere Sende-Empfangsmodul (16) von Signalen der zumindest einen Innenantenne (110) und der zumindest einen Außenantenne (120) basierend auf einer Kombination der Signale der zumindest einen Innenantenne (110) und der zumindest einen Außenantenne (120) bereitzustellen.

3. Vorrichtung (10) gemäß Anspruch 2 ferner umfassend zumindest einen Diplexer (18) ausgebildet zum Trennen von Frequenzanteilen des Frequenzbands und des weiteren Frequenzbands für die Signalverarbeitung der Signale.

4. Vorrichtung (10) gemäß einem der vorhergehenden Ansprüche, wobei das Kontrollmodul (14) ausgebildet ist, die Signalverarbeitung als Maximal-Ratio-Kombination bereitzustellen,
oder wobei das Kontrollmodul (14) ausgebildet ist, die Signalverarbeitung als Auslese des stärkeren Signals der Signale der zumindest einen Innenantenne (110) und der zumindest einen Außenantenne (120) bereitzustellen.

5. Vorrichtung (10) gemäß einem der vorhergehenden Ansprüche ferner umfassend ein oder mehrere angepasste Filter für eine Filterung der Signale vor der Signalverarbeitung.

6. Vorrichtung (10) gemäß Anspruch 5, wobei die ein oder mehreren angepassten Filter zumindest ein Element der Gruppe von Signalangepasstes Filter, Kanalangepasstes Filter und Signal- und Kanalangepasstes Filter umfassen.

7. Vorrichtung (10) gemäß einem der vorhergehenden Ansprüche, wobei die Signalverarbeitung auf Autokorrelationsfunktionen der Signale basiert.

8. Vorrichtung (10) gemäß einem der vorhergehenden Ansprüche, wobei das Sende-Empfangsmodul (12) ausgebildet ist, gleichzeitig über die Innenantenne (110) und über die Außenantenne (120) zu kommunizieren.

9. Vorrichtung (10) gemäß einem der vorhergehenden Ansprüche, wobei das Kontrollmodul (14) ausgebildet ist, mit dem Sende-Empfangsmodul (12) einen Rake-Empfänger zu bilden.

10. Verfahren für ein Fahrzeug (100), das Fahrzeug (100) umfassend zumindest eine Innenantenne (110) und zumindest eine Außenantenne (120), das Verfahren umfassend
Kombinieren (22) der Signale der zumindest einen Innenantenne (110) und der zumindest einen Außenantenne (120);
Verarbeiten (24) der Kombination der Signale der zumindest einen Innenantenne (110) und der zumindest einen Außenantenne (120);
Bestimmen eines Nutzsignals eines Kommunikationspartners in den empfangenen Signalen;
Bestimmen, ob ein Signalanteil des Nutzsignals der Innenantenne (110) oder ein Signalanteil des Nutzsignals der Außenantenne (120) überwiegt; und
Bereitstellen eines Ausgangssignals für den Kommunikationspartner über die Innenantenne (110) oder die Außenantenne (120) basierend auf den Signalanteilen.

11. Programm mit einem Programmcode zum Durchführen des Verfahrens nach Anspruch 10 wenn der Programmcode auf einem Computer, einem Prozessor, einem Kontrollmodul oder einer programmierbaren Hardwarekomponente ausgeführt wird.

## Claims

1. Apparatus (10) for a vehicle (100), the vehicle (100) further comprising
at least one interior antenna (110) and at least one exterior antenna (120), the apparatus comprising
a transmission/reception module (12) for communication using a frequency band; and
a control module (14) configured to:
control the transmission/reception module (12), provide signal processing for the transmission/reception module (12) for signals of the at least one interior antenna (110) and of the at least one exterior antenna (120) based on a combination of the signals of the at least one interior antenna (110) and of the at least one exterior antenna (120),
wherein the control module (14) is configured to determine a useful signal of a communication partner in the received signals,
and wherein the control module (14) is configured to determine whether a signal component of the useful signal of the interior antenna (110) or a signal component of the useful signal of the exterior antenna (150) predominates,
and wherein the control module (14) is configured to take the signal components as a basis for providing an output signal for the communication partner via the transmission/reception module (12) using the interior antenna (110) or the exterior antenna (120).

2. Apparatus (10) according to Claim 1, further comprising a further transmission/reception module (16) for communication using a further frequency band, which is different from the frequency band of the transmission/reception module (12),
wherein the control module (14) is further configured to provide further signal processing for the further transmission/reception module (16) for signals of the at least one interior antenna (110) and of the at least one exterior antenna (120) based on a combination of the signals of the at least one interior antenna (110) and of the at least one exterior antenna (120).

3. Apparatus (10) according to Claim 2, further comprising at least one diplexer (18) configured to separate frequency components of the frequency band and of the further frequency band for the signal processing for the signals.

4. Apparatus (10) according to one of the preceding claims, wherein the control module (14) is configured to provide the signal processing as maximum ratio combination,
or wherein the control module (14) is configured to provide the signal processing as reading of the stronger signal from the signals of the at least one interior antenna (110) and of the at least one exterior antenna (120).

5. Apparatus (10) according to one of the preceding claims, further comprising one or more matched filters for filtering the signals before the signal processing.

6. Apparatus (10) according to Claim 5, wherein the one or more matched filters comprise at least one element from the group comprising signal-matched filter, channel-matched filter and signal- and channel-matched filter.

7. Apparatus (10) according to one of the preceding claims, wherein the signal processing is based on autocorrelation functions of the signals.

8. Apparatus (10) according to one of the preceding claims, wherein the transmission/reception module (12) is configured to communicate using the interior antenna (110) and using the exterior antenna (120) at the same time.

9. Apparatus (10) according to one of the preceding claims, wherein the control module (14) is configured to form a rake receiver with the transmission/reception module (12).

10. Method for a vehicle (100), the vehicle (100) comprising at least one interior antenna (110) and at least one exterior antenna (120), the method comprising
combining (22) the signals of the at least one interior antenna (110) and of the at least one exterior antenna (120);
processing (24) the combination of the signals of the at least one interior antenna (110) and of the at least one exterior antenna (120);
determining a useful signal of a communication partner in the received signals;
determining whether a signal component of the useful signal of the interior antenna (110) or a signal component of the useful signal of the exterior antenna (120) predominates; and
providing an output signal for the communication partner using the interior antenna (110) or the exterior antenna (120) based on the signal components.

11. Program having a program code for performing the method according to claim 10 when the program code is executed on a computer, a processor, a control module or a programmable hardware component.

## Revendications

1. Dispositif (10) destiné à un véhicule (100), le véhicule (100) comprenant en outre au moins une antenne intérieure (110) et au moins une antenne extérieure (120), le dispositif comprenant un module émetteur-récepteur (12) pour les communications sur une bande de fréquences ; et
un module de commande (14) conçu pour :
commander le module émetteur-récepteur (12),
assurer un traitement de signal destiné au module émetteur-récepteur (12) de signaux de l'au moins une antenne intérieure (110) et de l'au moins une antenne extérieure (120) sur la base d'une combinaison des signaux de l'au moins une antenne intérieure (110) et de l'au moins une antenne extérieure (120),
dans lequel le module de commande (14) est conçu pour déterminer un signal utile d'un partenaire de communication dans les signaux reçus,
et dans lequel le module de commande (14) est conçu pour déterminer si une composante de signal du signal utile de l'antenne intérieure (110) ou une composante de signal du signal utile de l'antenne extérieure (120) prédomine,
et dans lequel le module de commande (14) est conçu pour fournir un signal de sortie au partenaire de communication au moyen du module émetteur-récepteur (12) par l'intermédiaire de l'antenne intérieure (110) ou l'antenne extérieure (120) sur la base des composantes de signal.

2. Dispositif (10) selon la revendication 1, comprenant en outre un autre module émetteur-récepteur (16) pour les communications sur une autre bande de fréquences différente de la bande de fréquences du module émetteur-récepteur (12),
dans lequel le module de commande (14) est en outre conçu pour fournir un autre traitement de signal destiné à l'autre module émetteur-récepteur (16) de signaux de l'au moins une antenne intérieure (110) et de l'au moins une antenne extérieure (120) sur la base d'une combinaison des signaux de l'au moins une antenne intérieure (110) et de l'au moins une antenne extérieure (120).

3. Dispositif (10) selon la revendication 2, comprenant en outre au moins un duplexeur (18) conçu pour séparer les composantes de fréquence de la bande de fréquences et de l'autre bande de fréquences pour le traitement de signal appliqué aux signaux.

4. Dispositif (10) selon l'une des revendications précédentes, dans lequel le module de commande (14) est conçu pour assurer le traitement du signal sous la forme d'une combinaison de rapports maximaux,
ou dans lequel le module de commande (14) est conçu pour assurer le traitement de signal sous la forme d'une lecture du signal le plus intense des signaux de l'au moins une antenne intérieure (110) et de l'au moins une antenne extérieure (120).

5. Dispositif (10) selon l'une des revendications précédentes, comprenant en outre un ou plusieurs filtres adaptés pour filtrer les signaux avant le traitement de signal.

6. Dispositif (10) selon la revendication 5, dans lequel le ou les filtres adaptés comprennent au moins un élément du groupe constitué par un filtre adapté au signal, un filtre adapté au canal et un filtre adapté au signal et au canal.

7. Dispositif (10) selon l'une des revendications précédentes, dans lequel le traitement de signal est basé sur des fonctions d'autocorrélation des signaux.

8. Dispositif (10) selon l'une des revendications précédentes, dans lequel le module émetteur-récepteur (12) est conçu pour communiquer simultanément par l'intermédiaire de l'antenne intérieure (110) et de l'antenne extérieure (120).

9. Dispositif (10) selon l'une des revendications précédentes, dans lequel le module de commande (14) est conçu pour former un récepteur Rake avec le module émetteur-récepteur (12).

10. Procédé destiné à un véhicule (100), le véhicule (100) comprenant au moins une antenne intérieure (110) et au moins une antenne extérieure (120), le procédé consistant à
combiner (22) les signaux de l'au moins une antenne intérieure (110) et de l'au moins une antenne extérieure (120) ;
traiter (24) la combinaison des signaux de l'au moins une antenne intérieure (110) et de l'au moins une antenne extérieure (120) ;
déterminer un signal utile d'un partenaire de communication dans les signaux reçus ;
déterminer si une partie de signal du signal utile de l'antenne intérieure (110) ou une partie de signal du signal utile de l'antenne extérieure (120) prédomine ; et
fournir un signal de sortie au partenaire de communication par l'intermédiaire de l'antenne intérieure (110) ou de l'antenne extérieure (120) sur la base des composantes de signal.

11. Programme comportant un code de programme destiné à mettre en oeuvre le procédé selon la revendication 10 lorsque le code de programme est exécuté sur un ordinateur, un processeur, un module de commande ou un composant matériel programmable.
